# EUROPEAN PATENT APPLICATION

(11) **EP 4 552 448 A1**
(43) Date of publication of application: **14.05.2025**
(21) Application number: 24211901.4
(22) Date of filing: 08.11.2024
(51) Int. Cl.: A01B 39/18, A01M 21/02

(54) **WEED PULLER APPARATUS**

(30) Priority: 09.11.2023 GB 202317208
(71) Applicant: Campion, Robert, Kilkenny (IE)
(72) Inventor: Campion, Robert, Kilkenny (IE)
(74) Representative: Murgitroyd & Company

(57) **Abstract**

A weed puller apparatus comprises a body configured for mounting on a vehicle, with the body extending longitudinally and horizontally across a path of movement of the vehicle as it moves through a crop to be weeded, the body including: a first rotating member extending along a longitudinal axis, the apparatus being configured to maintain the first rotating member at approximately a height of the crop along its length; and a second rotating member disposed above and ahead of the first rotating member in the path of movement of the vehicle as it moves through the crop, the second rotating member comprising an outer surface configured to engage weeds extending to a height above that of the crop and to draw such weeds between the first rotating member and the second rotating member so that the weeds are uprooted and dispensed from between the first and second rotating members.

## Description

### Field

The present invention relates to a weed puller apparatus.

### Background

Weed infestation and unwanted crops are a persistent challenge in agriculture or horticulture, necessitating effective methods for their control and removal. Traditional methods have mostly relied on the application of chemical agents, which have raised concerns regarding soil or water contamination and environmental impact in general. In addition, some resistant weed species have developed, rendering chemical control much less reliable.

Mechanical alternatives to chemical weed control include US 4183411, from Bourquin Innovations, which discloses an apparatus connectable to the rear or front portions of a tractor that can be used jointly with a cultivator to loosen the soil. The weed puller apparatus includes a main support means selectively connected to the rear or front of the tractor; a weed pulling means connected to the main support means; and a power and control means operably associated with the power supply of the tractor and connected to the weed pulling means to drive same. The weed pulling means includes cooperating pairs of contacting weed pulling assemblies, some are driven by the power means and others are driven by frictional contact between adjacent ones. Each weed pulling assembly includes a pair of adjacent and axially aligned wheel members; support shaft assembly to rotatably support the respective pairs of wheel members; a support arm assembly to connect each support shaft assembly to the main support means; and a guard and alignment assembly mounted about each support shaft assembly. Each guard and alignment assembly includes a cylindrical guard member to keep weeds from winding about the support shaft assembly and flexible spike member to contact and straighten weeds for subsequent pulling thereof. Every other pair of the weed pulling assemblies are rotating in opposite and upward directions whereby the adjacent wheel members cooperate to grasp and pull weed members upwardly therebetween. The apparatus includes a crop level sensing control means to automatically maintain the weed pulling apparatus above the crop level to only extract the weed members.

There remains a need for a weed puller that can more precisely pull unwanted crops from soil with minimal disturbance to a cultivated crop.

### Summary

According to a first aspect of the present invention, there is provided a weed puller apparatus according to claim 1.

### Brief Description of Drawings

Embodiments of the present invention will now be described, by way of example, with reference to the accompanying drawings, in which:
Figure 1 is an isometric view of a weed puller apparatus in accordance with an embodiment of the present invention in a deployed state.
Figure 2 is a reverse isometric view of the weed puller apparatus of Figure 1 in a stowed state.
Figure 3 is an isometric view of a portion of a weed puller apparatus of Figures 1 and 2.
Figure 4 is a side view of a central portion of a weed puller apparatus, in accordance with another embodiment of the present invention.
Figure 5 is a perspective view of a portion of a weed puller apparatus in accordance with a further embodiment of the present invention.
Figure 6 is a perspective view of a portion of a weed puller apparatus in accordance with a further embodiment of the present invention.
Figure 7 is a perspective view of a portion of a weed puller apparatus in accordance with a still further embodiment of the present invention.
Figure 8 is an isometric view of a weed collector assembly that can be installed in a weed puller apparatus in accordance with an embodiment of the present invention.
Figure 9a is an isometric view of a weed puller apparatus, comprising two weed collector assemblies in accordance with an embodiment of the present invention.
Figure 9b is an isometric view of the weed puller apparatus of Figure 9a, with a cover covering the two weed collector assemblies.
Figure 10 is a side view of a portion of the weed puller apparatus of Figures 9A-9B.

### Description of the Embodiments

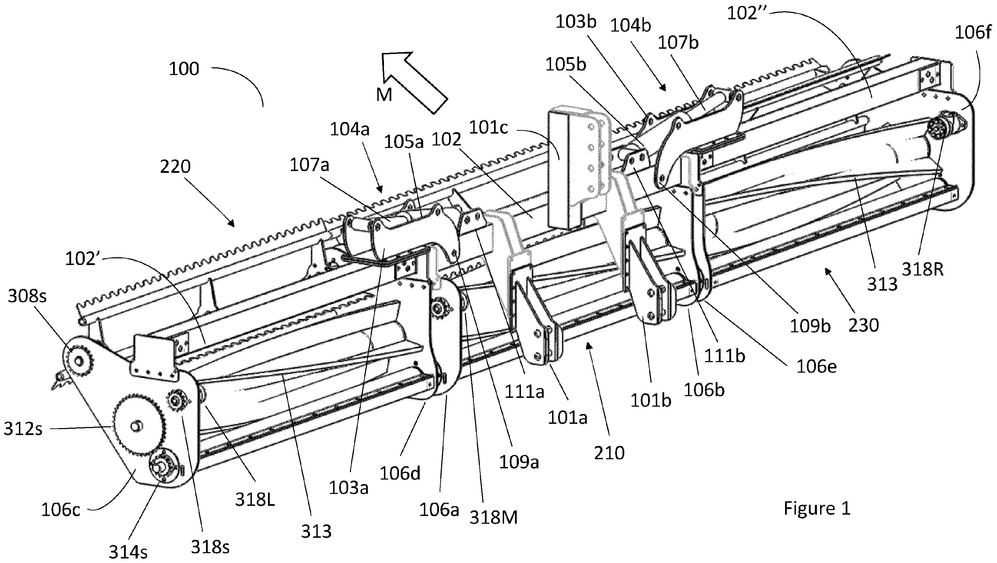

Referring now to Figure 1, there is shown a weed puller 100, according to an embodiment of the present invention in a deployed state. The weed puller 100 is configured to be securely connected to a field weeding machine (not shown). For example, the weed puller 100 may be connected to a tractor through a conventional three-point hitch of the type used to connect other implements to the tractor. In a preferred embodiment, the weed puller 100 is configured to be connected to the front of the field weeding machine, but in alternatives, the weed puller 100 may be rear mounted to the field weeding machine. In any case, it should be noted that the weed puller 100 could be configured to be connected to any type of agricultural or horticultural machinery or indeed any vehicle.

In the embodiment, the weed puller 100 comprises an articulated body having a longitudinal axis extending horizontally in a direction transverse to the direction of travel M of the weed pulling machine as it is driven across a field. The body comprises a central portion 210, typically extending to no more than about the width of the field weeding machine, and a left portion 220 and a right portion 230 connected to opposite ends of the central portion through respective articulated joints 104a, 104b.

In the embodiment of Figure 1, the central portion 210 includes a longitudinal support arm 102, in this case formed from a piece of box section, extending across the width of the central portion and being connected along its length through coupling joints 101a-c extending rearwardly from the support arm 102 towards the field weeding machine. Each of joints 101a-c comprises a pair of parallel spaced-apart flanges extending from a connecting section orthogonally away from the support arm 102. The connecting sections for joints 101a and 101b extend downwardly from the support arm 102 while the connecting section for joint 101c extends upwardly from the support arm 102 from a location on the support arm 102 between the joints 101a and 101b, so that the distal ends of the joints present a triangular configuration suitable for connection to a conventional three-point hitch. Each flange for joints 101a-c comprises one of each of a plurality of pairs of juxtaposed holes through which a respective pin may pass to secure the weed puller in place on a field weeding machine. It will be appreciated that while two pairs of holes are shown in each of joints 101a and 101b and four pairs of holes are shown in joint 101c, each joint may comprise fewer or more pairs of holes.

In the embodiment of Figure 1, the flanges of joints 101a and 101b are bolted to their respective sections through a baseplate from which the flanges extend and in which a plurality of pairs of holes is formed. As such, both the plurality of pairs of holes in the distal ends of the joints 101a-101c, as well as the bolted connections between the flanges of joints 101a and 101b and their respective sections allow the spacing of the joints 101a-c to be adjusted so that they can be fitted to a variety of vehicles.

It will be further appreciated that, while a configuration with three joints 101a-c is described, other non-standard configurations may be used. For example, and without limitation, only joints 101a and 101b may be used. In any case, any suitable combination of mechanical, hydraulic, pneumatic or electronically controlled connections may be envisioned to secure the support arm 102 to the field weeding machine.

Once secured, the field weeding machine to which the weed puller 100 is mounted may control a height of the weed puller 100 by raising or lowering its hitch points connected to the support arm 102. Indeed, with a crop level sensing control means (not shown), the height of the weed pulling apparatus could be automatically adjusted to maintain the apparatus at a desired height relative to the crop level.

Similar to the central portion 210, each of the left and right portions 220, 230 comprises a respective support arm 102', 102". With the joints 104a, 104b in a deployed state as shown in Figure 1, each of the support arms 102' and 102" extend coaxially away from support arm 102, with the support arm 102 being connected to each of the support arms 102' and 102" through the articulated joints 104a and 104b to allow for articulated movement of the body of the weed puller 100.

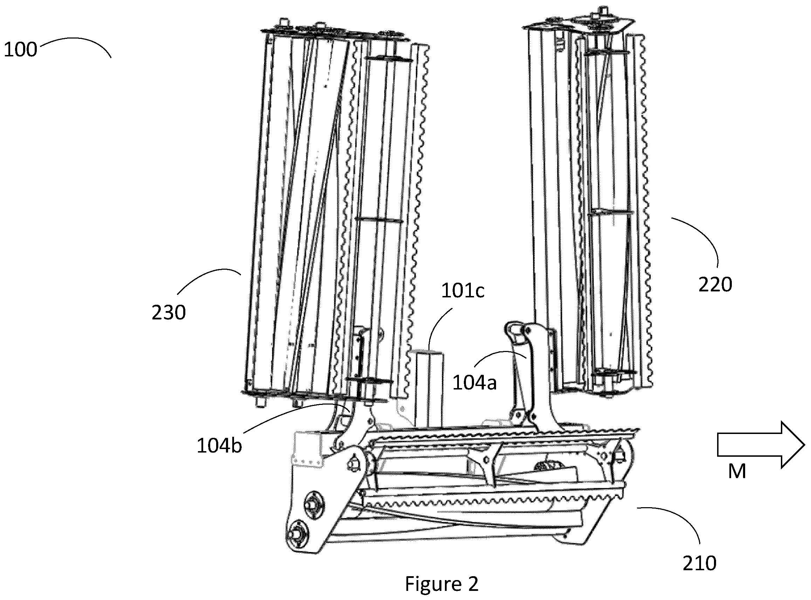

In the illustrated embodiment of Figure 1, each of articulated joints 104a, 104b comprises a pair of parallel spaced-apart link plates 103a, 103b which straddle the support arm 102 and which are rotatably connected to front and rear surfaces of the support arm 102 via a pin 109a, 109b which passes through the respective link plates 103a, 103b and the support arm 102. The distal end of the link plates 103a, 103b are fixedly connected to the respective upper surfaces of support arms 102', 102". A respective hydraulic ram, each having a cylinder 105a,105b from which a piston 107a, 107b extends, is located between the link plates 103a, 103b of each joint 104a, 104b. Each ram 105a, 105b is pivotally mounted to the support arm 102 between a pair of flanges 111a, 111b extending from the upper surface of the support arm 102, with the piston of the joint 104a pointing towards the left portion 220 and the piston of the joint 104b pointing towards the right portion 230. The distal end of each piston 107a, 107b is pivotally connected between the distal ends of the link plates 103a, 103b of each joint 104a, 104b. Each of the pistons 107a, 107b are connected via hydraulic circuitry (not shown) to controls of the field weeding machine, so that they can be actuated by a user driving the machine. When the pistons 107a, 107b are contracted, the joint 104a and 104b pivot the respective support arms 102', 102" about the axis of the pins 109a, 109b to move the weed puller 100 from the deployed state, shown in Figure 1, to a stowed state, where the left and right portions 220, 230 extended upwardly, as shown in Figure 2. In this way, in order facilitate travel between separate fields to be weeded or when the field weeding machine is to be stored when not in use, the left and right portions 220, 230 can be retracted to reduce the overall width of the weed puller 100, and before operation, the left and right portions can be extended in order to maximise the reach of the weed puller 100 and so the area of a field which can be treated in a single pass. As such, it will be appreciated that the overall length of the left and right portions 220, 230 is only limited by the maximum available clearance height available when travelling between weeding locations.

It should be appreciated that any suitable type of joints 104a, 104b may be used. While the joints 104a, 104b are described as being hydraulically controlled in a similar manner to other implements which are connected to tractors, they could also be mechanically, electronically, or pneumatically controlled. Also, each joint 104a, 104b can be controlled independently, or the joints 104a, 104b can be controlled in tandem according to whether finer or fewer controls are required.

While the weed puller 100 comprises three portions 210, 220 and 230, in variations of the embodiment, the weed puller may comprise either: a single portion for mounting on the field weeding machine; two portions, each pivotally mounted to the field weeding machine; or indeed additional portions, provided that the weed puller can be securely connected to the field weeding machine.

Equally, while the present embodiment comprises a three-section weed puller in which sections fold relative to one another when moving between stowed and a deployed state, in variations of the embodiment, telescopic sections could be employed.

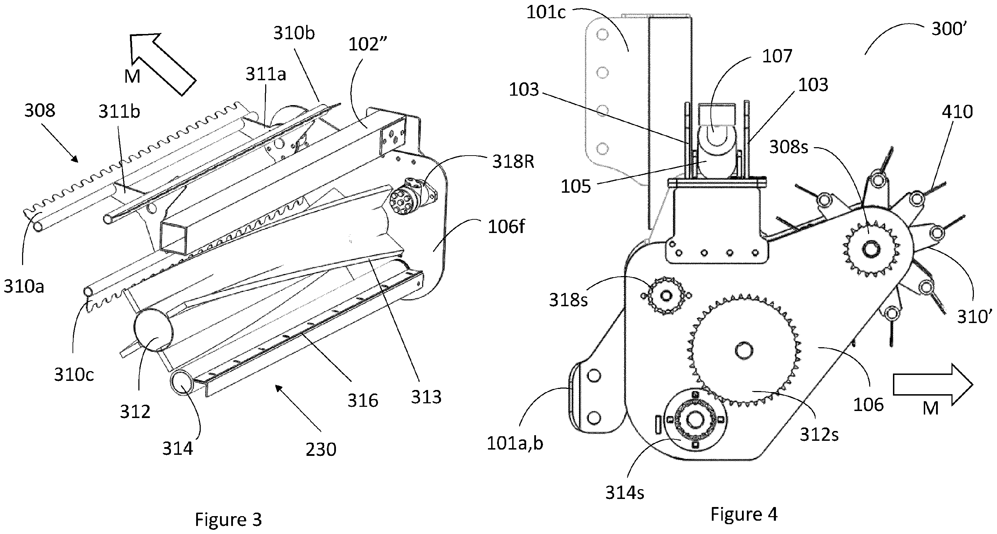

Referring back to Figure 1, the central portion 210 comprises a left bulkhead 106a and a right bulkhead 106b, each being securely connected to and depending generally downwardly from an opposite end of the support arm 102. The left and right bulkheads 106a and 106b define a volume suitable to receive and hold in place a number of rollers as well as to provide a mount for a motor configured to drive the rollers, as will be further described in relation to Figures 3 and 4. Similarly, the left portion 220 comprises an outer bulkhead 106c and an inner bulkhead 106d, each of which is securely connected to a first and second end of the support arm 102' respectively, and the right portion 230 comprises a left bulkhead 106e and a right bulkhead 106f, each of which is securely connected to a first and second end of the support arm 102" respectively.

In a preferred embodiment, the respective lengths of the three portions of the weed puller 100 are substantially equal, typically between 1.5 m and 2 m. However, any other length may be used, and the three portions of the weed puller 100 may have different respective lengths. In a preferred embodiment, the three portions will use the same respective configuration, but alternatively, different portions of the weed puller may be used with different configurations. Exemplary configuration and components of each portion will be described below with reference to Figure 3 and Figure 4.

In the embodiment, apart from the joints 101a-c, each of the portions 210, 220, 230 are similar internally and so the right portion 230 will first be described in detail, with the same applying to the centre and left portions 210, 220 unless otherwise stated.

Referring now to Figure 3, there is shown in detail one end of a right portion 230 of the weed puller 100. Again, when deployed, a longitudinal axis of the portion 230 extends along a direction transverse to the direction of travel M of the field weeding machine operating in a field. As described above with reference to Figure 1, the portion 230 comprises support arm 102" securely connected to an outer bulkhead 106f and an inner bulkhead (not shown), extending along the longitudinal axis of the portion 230. The portion 230 further comprises a main roller 312, a bottom roller 314 and a feed reel 308. Each of the main roller 312, the bottom roller 314 and the feed reel 308 extend between the outer bulkhead 106f and the inner bulkhead 106e along the longitudinal axis of the portion 230 and are rotatably mounted to the bulkheads 106e, 106f.

The axis of the main roller 312 is disposed above and ahead of the bottom roller 314 in the direction of travel M of the weed puller 100 and the axis of the feed reel is disposed above and ahead of the main roller 312 in the direction of travel M.

Each of feed reel 308 and rollers 312 and 314 comprise an axle extending through the bulkhead 106f. A motor 318R is mounted inside the bulkhead 106f and comprises an axle again extending through the bulkhead 106f.

Referring now to Figure 1, which best shows the opposite arrangement for the left portion 220 and the bulkhead 106c, in the embodiment, a respective sprocket 308s, 312s, 314s, is located on the ends of the axles of each of the feed reel 308 and the rollers 312, 314. A further sprocket 318s is located on the end of the axle of the motor 318L mounted to the inner surface of the bulkhead 106c. In the embodiment, each of the sprockets 308s, 312s, 314s and 318s are interlinked by chains (not shown), so that rotation of the motor 318L causes corresponding rotation of the sprockets 308s, 312s, 314s and 318s and so the reel/rollers 308, 312, 314.

In the embodiment, a motor 318M is mounted to an inner surface of the bulkhead 106a and drives each of the reel/rollers of the centre portion 210 in the same manner as the motors 318L, 318R. Note that the direction of rotation of the motor 318R needs to be the reverse of the motors 318L and 318M for the same gearing to drive the reel/rollers in the same direction.

In any case, in the embodiment, for each portion 210, 220 and 230, the motors have the same rotation speed and the features of each roller or reel, are the same and are positioned at a same respective height at a given time. However, in variants of the embodiment, for example, the left and right portions 220, 230 might have a different roller/reel configuration than the centre portion 210.

It will be appreciated that rather than chains, each of the sprockets could be intermeshed directly or through intermediate sprockets. Also, while shown exposed, it will be appreciated that a housing can be provided to cover the sprockets on the outer bulkheads 106c, 106f when in use.

In a preferred embodiment, each of the motors 318L, 318M and 318R is a hydraulic motor connected to the hydraulic supply (not shown) of the field weeding machine, although it will be appreciated that in variants of the embodiment, an electric motor could be used.

Each motor can be driven independently, and this could be useful if only one of the left or right portions is deployed, for example, in a narrow area; or each motor can be driven in tandem to reduce the number of operator controls.

In still further variants of the embodiment, rather than including independent motors, each of the rollers/reel of the left and right portions 220, 230 could be configured to interlock with the ends of the corresponding rollers/reel of the centre portion 210 so that only the centre portion 210 would need to be provided with a motor 310 and with the rollers/reel of the left and right portions 220, 230 being driven by their corresponding rollers/reel of the centre portion 210. In a still further alternative, the rollers/reel of the centre portion 210 could be driven through interlocking with the ends of the corresponding rollers/reel of one or both of the left or right portions 220, 230.

Turning now to the operation of the weed puller 100. In use, the weed puller 100 is positioned so that the bottom roller 314 is set at approximately the height of the crop being cultivated. This tends to be a generally consistent height across a homogeneous crop, planted at the same time and exposed to the same environmental conditions. Indeed, the bottom roller 314 can be set to just below the height of the crop so that it deflects and/or brushes over the top of the crop without engaging the crop. The main roller 312 and the bottom roller 314 are driven to rotate in opposite directions, with the main roller 312 when viewed from the top, rotating away from the field weeding machine.

The surface of the main roller 312 is configured so that as the weed puller 100 moves across a crop, it contacts weeds which have grown to a height above that of the crop, engages the weeds and draws the weeds towards an interface between the main roller 312 and the bottom roller 314. Any weeds engaged by the main roller 312 are drawn between the main roller 312 and the rear roller 314 and gripped sufficiently so that the weeds are pulled out of the soil, drawn between the main roller 312 and the rear roller 314 and then dispensed from the rear of the weed puller 100. Any spacing between the main roller 312 and the bottom roller 314 should be such that soil attached to the roots of a weed pulled through the rollers 312, 314 is rejected by the rollers and so only the weed with as little soil as possible attached is drawn through the rollers 312, 314. Once a weed has passed between the rollers 312, 314, it is dispensed onto the ground behind the weed puller 100 where it tends to die off.

In the illustrated embodiment of Figures 1-4, the main roller 312 comprises a central cylinder around the outer surface of which a plurality of vanes 313, in this case 4, are formed. In the embodiment, the vanes 313 follow a helical path around the length of the central cylinder. In use, as the roller 312 rotates, the vanes deflect weeds extending above a crop between the rollers to grip, pull the weeds between the rollers 312, 314 and then dispense the weeds from behind the rollers 312, 314.

It will be appreciated that Figure 3 shows the main 312 comprising four vanes preferably made of rubber, but any suitable number or shape of vanes, any material of vanes and any combination thereof may be used. In the embodiment, each of the vanes have similar dimensions, but this is not essential.

In the embodiment, a blade 316 extends between the two bulkheads 106e, 106f, disposed to the rear of and adjacent the rear roller 314. The blade 316 can be mounted so that a position and a height of the blade 316 is adjustable. In any case, the blade 316 is configured to cut unwanted material, for example tall weeds, that may wrap around the rear roller 314.

It will be appreciated here that the outer bulkhead 106f and the inner bulkhead 106e further act to protect users from the rotation of the rollers 212, 314 and reel 310.

It will be appreciated that in variants of the illustrated embodiments, further blades such as the blade 316 could also be employed.

It will be appreciated that in some cases, weeds may have grown to a height greater than the main roller 312 and so that rather than being drawn between the rollers 312, 314, they might only be deflected away from the weed puller 100 and not fed between the rollers 312, 314.

In order to avoid such a problem, each portion of the weed puller 100 is provided with a feed reel 308. The reel 308 is positioned at the front of the weed puller 100 at a height higher than the main roller 312. In the embodiment of Figures 1-3, the feed reel 308 comprises three combed blades 310a, 310b and 310c mounted to the ends of a series three legged hubs 311a, 311b spaced across the width of the reel 308. The centre of the hub at each end of the reel 308 (only 311a is shown) comprises an axle passing through the bulkhead 106f.

Again, the reel 308 rotates away from the weed puller 100 when viewed from the top so that as the combed blades 310a-c come into contact with particularly tall weeds, these are deflected downwardly so that they are captured by the main roll 312, drawn between the rollers 312, 314 and pulled from the ground.

In the embodiment, each roller 314, 312 and the reel 308, rotates about a fixed axis, setting their relative spacing. It will be appreciated that in variants of the illustrated embodiment, the rollers/reel can be mounted to allow this spacing to be adjusted. In still further embodiments, the main roller 312, the rear roller 314, the reel 308 and any combination thereof may be spring-mounted so that their relative spacing can vary against the bias of the spring, so allowing the rollers to pass varying widths of material therebetween.

It should also be noted that in variants of the above embodiment, the bottom roller 314 need not be driven and can freely rotate under the pressure of weeds being feed passed the roller 314 by the roller 312.

It will be appreciated that many variants of the above illustrated embodiment are possible.

Referring now to Figure 4, instead of a rigid reel comprising combed blades 310a-c, the reel 310' of Figure 4 comprises a number of hinged flaps or paddles 410, each pivotally mounted on the ends of spokes extending from a central hub rotating about a similar axis to the reel 310 of Figures 1-3. Again, the flaps 410 deflect taller weeds downwardly so that they are fed between the rollers 312, 314 as before.

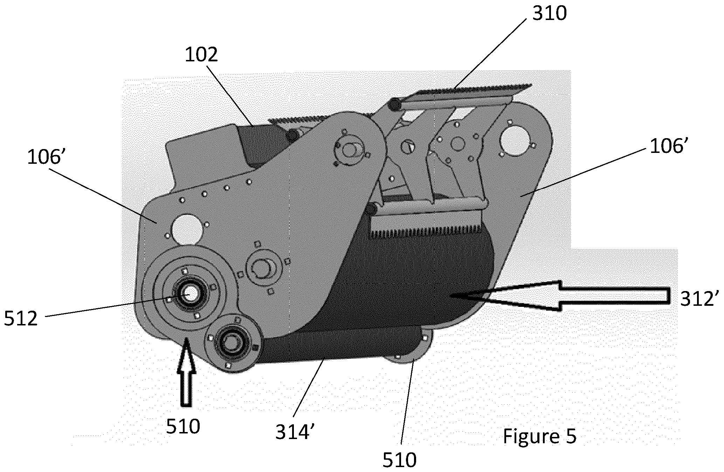

As mentioned above, the main roller 312 can be configured in a number of ways so that it engages and draws weeds between the rollers 312, 314. Referring now to Figure 5, rather than the shaped configuration of the roller 312 with vanes 313 extending from the surface of the roller 312, the roller 312' comprises a larger diameter drum having a rubber coated surface.

In Figure 5, rather than being directly mounted within the bulkheads 106', each end of the bottom roller 314' is rotatably mounted within a distal end of a respective link plate 510. The proximal end of each link plate 510 is mounted to a respective bulkhead so that it can pivot about an axis of rotation 512. The link plates 510 are spring loaded to bias the bottom roller 314' towards the main roller 312' (spring not shown).

This arrangement allows the spacing between the rollers 312', 314' to vary in order to allow heavier weeds and especially weeds which have solid or tuberous root systems to pass through the rollers.

Note that this arrangement of the roller 314' could also be employed in each of the embodiments of Figures 1 to 4.

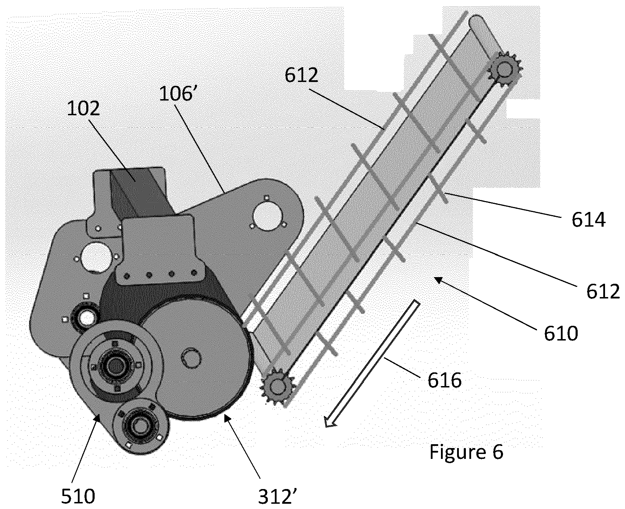

Referring now to Figure 6, rather than a rotating feed reel 308, the weed puller may comprise a conveyor 610 extending upwardly and away from the front of the weed puller. The chain 610 comprises a pair of pulley cables 612 looped around each end of the elevator. A plurality of rods 614 are mounted at each of their ends to a respective pulley cable 612 so that each rod 614 extends horizontally across the width of the portion of the weed puller. The pulley cables are driven to move the rods 612 at the front surface of the conveyor 610 downwardly in the direction of arrow 616 so that the tallest weeds are deflected downwardly and between the rollers 312' and 314'.

It will be appreciated that this arrangement could also be used in each of the embodiments of Figures 1 to 5.

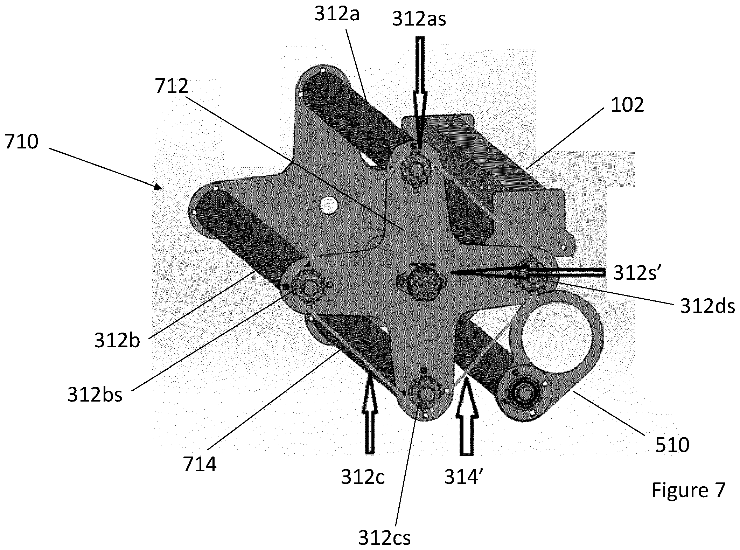

Referring now to Figure 7, rather than a separate deflection mechanism such as the feed reel 308 or elevator chain 610 for deflecting the tallest weeds between the main and bottom rollers, these functions can be integrated. In this embodiment, 4 main rollers, only 3 shown 312a-c, are rotatably mounted on a reel 710. An axle for each of the rollers extends through one end of the reel, and a sprocket 312as...312ds is mounted to the end of each axle. In the embodiment, one of the sprockets 312as is connected to a centre sprocket 312s' through a chain 712. The centre sprocket 312s' is in turn driven by the motor for the portion of the weed puller through a separate chain (not shown). A further chain 714 interconnects each of the sprockets 312as...312ds. Both the reel 710 and each of the rollers 312a-c within the reel are driven to rotate. As such any weeds which come into contact with any roller of the reel are engaged and fed between that roller and the bottom roller 314' where they are then pulled from the ground and dispensed.

While the reel 710 of Figure 7 performs both a deflection and feed function, it will be appreciated that in variants of the embodiment of Figure 7, a still further deflection mechanism such as the feed reel 310, 310' of Figures 1-4 or the conveyor 610 of Figure 5 could also be provided.

It will be appreciated that this arrangement of main rollers could also be used in each of the embodiments of Figures 1 to 6.

As mentioned above, the weed puller can comprise a sensor for determining a height of a crop and for automatically controlling a height of the weed puller accordingly.

In one embodiment, the weed puller can be provided with mechanically, hydraulically or electronically adjustable guide wheels or skids disposed towards the side of at least the central portion 210 as well as possibly the left and right portions 220, 230 and the height of these can be adjusted in response to sensor measurements.

Such ground engaging guide wheels or skids can be particularly useful for weeding lower height crops such as grass.

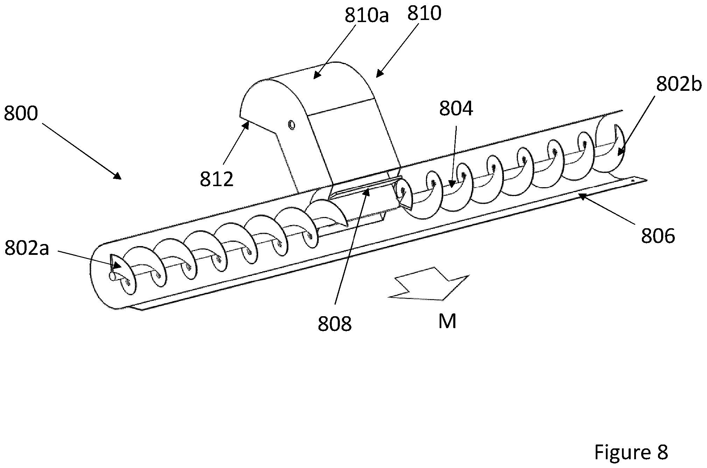

Referring now to Figure 8, there is illustrated a weed collector assembly 800 that can be installed in a weed puller apparatus according to embodiments of the present invention and that is configured to collect the weeds pulled out of the soil and convey the collected weeds to an exit point (where the pulled weeds may be collected using a suitable container).

In particular, the weed collector assembly 800 includes a body having a longitudinal axis extending horizontally, when the assembly 800 is installed in a weed puller apparatus, in a direction transverse to the direction of travel M of the weed pulling machine as it is driven across a field.

The weed collector assembly 800 further comprises a left screw conveyor (left auger conveyor) and a right screw conveyor (right auger conveyor) defined by a rotating shaft 804 with a helical screw blade 802a and a helical screw blade 802b disposed along a left portion and a right portion, respectively, of the shaft 804. The helical screw blades 802a and 802b are oriented in opposite directions along the shaft 804 in such a way that, when the shaft 804 is rotated, the screw blades 802a and 802b can collect and move weeds pulled out from the soil along opposite directions converging towards a central portion of the shaft 804.

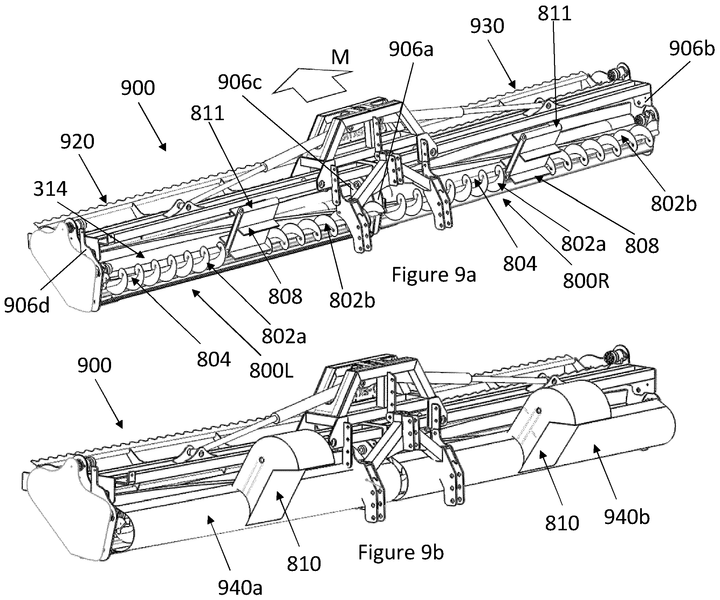

At the central portion of the shaft 804, there is provided an entrance portion of an extractor module 810 comprising a conveyor 811 (not viewable in Figure 8, because covered by the cover 810a, but viewable in Figure 9a) extending along a direction transversal to the shaft 104. For example, the conveyor of the module 810 is a belt type conveyor including a plurality of blades 808 (only some of which are viewable in Figure 8, at the entrance of the module 810) that are arranged in such a way that, when the conveyor of the module 810 is operated by respective driving means, the blades 808 move the weeds conveyed to the central portion of the shaft 804 until reaching an extraction point 812 of the module 810.

At the extraction point 812 of the module 810, the weeds can be collected in suitable containers (e.g. bags or hoppers). Alternatively or in addition, an apparatus (not illustrated in the Figures), can be provided at the extraction point 812 for grinding, chopping, mulching, treating and/or destroying the weed plant and seeds in such a way that the weeds, once dispensed out from the apparatus, cannot germinate on the soil. The apparatus can be operated by a hydraulic motor or mechanical drive.

It will be appreciated that a weed collector assembly usable in a weed puller apparatus according to embodiments of the present invention can include means for conveying the weeds pulled out of the soil towards the entrance of the extractor module 810 different than the screw blades 802a, 802b used in the weed collector assembly 800 of Figure 8, such as for example belt type conveyors. Similarly, any suitable type of conveyor can be used to drive the weeds from the entrance to the extraction point 812 of the extractor module 810, such as a screw (auger) conveyor.

Furthermore, it will be appreciated that, for some embodiments, a weed collector assembly can comprise a single screw blade along the longitudinal extension of the shaft 804, configured to move the weeds towards one end to the shaft 804, where the extractor module 810 is positioned.

Referring now to Figures 9a-9b, there is illustrated for example a weed puller 900 according to an embodiment of the present invention, including a left weed collector assembly 800L and a right weed collector assembly 800R, each corresponding to the assembly 800 illustrated in Figure 8.

In particular, the weed puller 900 substantially corresponds to the weed puller 100 illustrated in Figure 1, with the difference that the articulated body of the weed puller 900 (having a longitudinal axis extending horizontally in a direction transverse to the direction of travel M of the weed pulling machine) comprises deployable left portion 920 and right portion 930 without including a central portion therebetween as the central portion 210 of the weed puller 100 of Figure 1.

The left and right weed collector assemblies 800L and 800R are installed in an internal volume defined at the rear of the left portion 920 and the right portion 930, respectively, behind the bottom roller 314 (that is used to pull out the weeds from the soil in cooperation with the main roller 312, similarly to what disclosed in relation to the rollers 312, 314 of the weed puller 100 of Figure 1).

The rotating shaft 804 of the left weed collector assembly 800L extends between and is rotatably mounted to the outer and inner bulkheads 906d, 906c of the left portion 920 and the rotating shaft 804 of the right weed collector assembly 800R extends between and is rotatably mounted to the outer and inner bulkheads 906b, 906a of the right portion 930 (so as the rotation axis of the shafts 804 is substantially parallel to the axis of rotation of the bottom roller 314). In particular, the rotating shafts 804 of the left and right collector assemblies 800L, 800R are arranged behind (relative to the direction of travel M) and close to the bottom roller 314, in such a way that the weeds that are pulled out of the soil by the rotation of the bottom roller 314 falls onto the rotating screw blades 802a-802b of the shafts 804 and are conveyed, by the screw blades 802a-802b, towards the respective central conveyors 811 of the collector assemblies 800L, 800R.

With reference now to Figure 9b, covers 940a, 940b can be used to cover the components of the weed collector assemblies 800L, 800R.

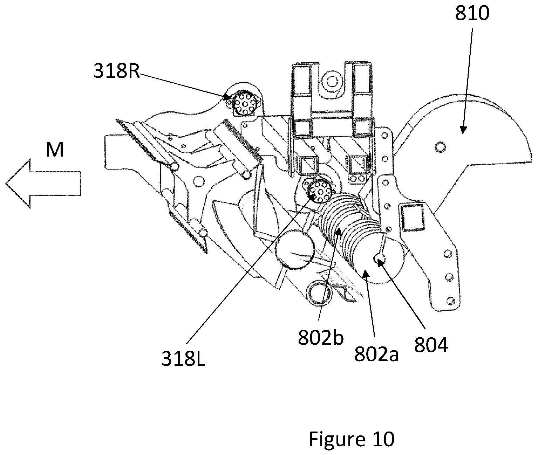

Referring now to Figure 10, motors 318L, 318R are mounted on the bulkheads 906c and 906b, respectively, and are configured to drive the rotation of the shaft 804 of the left weed collector assembly 800L and the right weed collector assembly 800R, respectively.

The motors 318L, 318R can be hydraulic motors connected to the hydraulic supply (not shown) of the field weeding machine, although it will be appreciated that in variants of the embodiment, electric motors could be used. Each motor can be driven independently, and this could be useful if only one of the left or right portions is deployed, for example, in a narrow area; or each motor can be driven in tandem to reduce the number of operator controls. In still further variants of the embodiment, a single motor may be used to drive the rotation of the shafts 804 of the weed collector assemblies 800L, 800R, in cooperation with interlocking means to transmit motion from the motor to both the shafts 804 or from one shaft 804, under rotation by the motor, to the other shaft 804.

It will also be appreciated that a weed collector assembly, such as the weed collector assembly 800 of Figure 8, can be used in a weed puller according to the embodiments of Figures 1-7. For example, a weed collector assembly can be installed in each of the central portion 210, left portion 220 and right portion 230 (or only in the left and right portions) of the weed puller 100 of Figure 1.

In further alternative embodiments of a weed puller having a body without deployable parts, one or more weed collector assemblies can be used, each including a single screw (auger) conveyor for moving the pulled weed towards an extractor assembly 810 disposed at the end of the rotating shaft 804.

## Claims

1. A weed puller apparatus (100) comprising:
a body configured for mounting on a vehicle, with the body extending longitudinally and horizontally across a path of movement of the vehicle as it moves through a crop to be weeded, the body including:
a first rotating member (314) extending along a longitudinal axis, the apparatus being configured to maintain said first rotating member at approximately a height of said crop along its length; and
a second rotating member (312) disposed above and ahead of said first rotating member in the path of movement of the vehicle as it moves through the crop, the second rotating member comprising an outer surface configured to engage weeds extending to a height above that of the crop and to draw such weeds between the first rotating member and the second rotating member so that the weeds are uprooted and dispensed from between the first and second rotating members.

2. The weed puller apparatus of claim 1 further comprising a deflection mechanism (308) disposed above and ahead of at least said first rotating member in the path of movement of the vehicle as it moves through the crop, the deflection mechanism being configured to engage any weeds extending to a height above that of said second rotating member and to feed such weeds between the first rotating member and the second rotating member.

3. The weed puller apparatus according to claim 1 wherein said body comprises one portion (210) of a multi-portion apparatus, each portion being movably connected to an adjacent portion (220, 230) so that said apparatus can moved between a deployed state wherein more than one portion of said apparatus extends longitudinally and horizontally across the path of movement of the vehicle as it moves through a crop and a stowed state in which a longitudinal extent of the apparatus is less than when said apparatus is in said deployed state.

4. The weed puller apparatus according to claim 3 in which at least one portion of said weed puller apparatus foldable relative to another portion through an articulated joint (104a, 104b).

5. The weed puller apparatus according to claim 1 wherein said second rotating member comprises a central cylinder from around an external surface of which a plurality of vanes (313) extend, said vanes being configured to engage weeds as said weed puller apparatus moves through the crop.

6. The weed puller apparatus according to claim 5 wherein each vane extends in a helical path around said surface of said central cylinder.

7. The weed puller apparatus according to claim 3 wherein each portion comprises a power source (318) for driving one or both of said first and second rotating members, and wherein said power source comprises a hydraulic motor.

8. The weed puller apparatus according to claim 2 wherein said deflection mechanism comprises a feed reel with an axis of rotation disposed above and ahead of said second rotating member in the path of movement of the vehicle as it moves through the crop, and wherein said feed reel comprises a plurality of combed blades (310) extending along a length of the reel.

9. The weed puller apparatus according to claim 2 wherein said deflection mechanism comprises a conveyor (610) disposed ahead of and extending upwardly and away from said second rotating member in the path of movement of the vehicle as it moves through the crop, a forward facing surface of said conveyor being driven to deflect weeds downwardly towards said second rotating member.

10. The weed puller apparatus according to claim 2 comprising a plurality of second rotating members (312a-c), each rotatably mounted on a reel which is rotatably mounted within said body, each second rotating member being rotatable from a relatively higher position during rotation of said reel where it may engage weeds to a lower position during rotation of said reel where it draws said weed between said second rotating member in said lower position and said first rotating member.

11. The weed puller apparatus according to claim 1 wherein said first rotating member is mounted within said body so that is moves relative to said second rotating member and is biased towards said second rotating member.

12. The weed puller apparatus according to claim 11 wherein said first rotating member is hingedly mounted within said body.

13. The weed puller apparatus according to claim 1 further comprising a blade (316) disposed behind said first rotating member in the path of movement of the vehicle as it moves through a crop to be weeded and extending along a length of said first rotating member, said blade being spaced from said first rotating member so that it may cut any weeds wrapped around said first rotating member.

14. The weed puller apparatus according to claim 3 wherein not every portion comprises a power source for driving one or both of said first and second rotating members, each such portion being interconnected with at least one portion comprising a power source when in a deployed state.

15. The weed puller apparatus according to claim 3 wherein movement of each first and second rotating member of each of said portions is synchronized.
